# EUROPEAN PATENT APPLICATION

(11) **EP 1 650 974 A2**
(43) Date of publication of application: **26.04.2006**
(21) Application number: 05022887.3
(22) Date of filing: 20.10.2005
(51) Int. Cl.: H04N 7/24, H04N 7/58

(54) **Video signal delivery system and video signal delivery method**

(30) Priority: 25.10.2004 JP 2004309427
(71) Applicant: Pioneer Corporation, Tokyo 153-8654 (JP)
(72) Inventor: Hashimoto, Kazunori, Tokyo (JP); Oishi, Tomoya, Tokyo (JP)
(74) Representative: Manitz, Finsterwald & Partner GbR

(57) **Abstract**

A video delivery system and method which can reduce the amount of data stream to be transmitted without damaging a reproduced image when a screen is partially concealed in paid digital broadcasting. A video signal transmitter comprises a shield processing means for concealing an input video signal such that a part of each frame screen included in the input video signal presents a predetermined pattern, a first compression encoding means for applying compression encoding to the concealed video signal at a high compression ratio, a subtracting means for extracting a differential signal between the compression encoded video signal and the input video signal, a second compression encoding means for applying compression encoding to the differential signal at a low compression ratio, and an encrypting means for applying predetermined encryption to an output signal from the second compression encoding means, wherein the encrypted signal is multiplexed on an output signal from the first compression encoding means, and the multiplexed signal is transmitted.

## Description

### BACKGROUND OF THE INVENTION

### 1 Field of the Invention:

The present invention relates to a video signal delivery system and a video signal delivery method for delivering pay broadcasting programs provided, for example, by broadcasting media such as a variety of digital broadcasting, CATV and the like.

### 2. Description of the Related Art:

In recent years, paid digital broadcasting for providing broadcasting programs only for viewers who have concluded a viewing contract becomes increasingly popular in a variety of broadcasting media such as terrestrial broadcasting, satellite broadcasting, CATV and the like. Such paid digital broadcasting provides even uncontracted viewers with such services as a short free broadcasting time or delivery of contents of pay broadcasting programs in a blurred image quality in order to encourage uncontracted viewers, who have not concluded a viewing contract with a broadcasting operator, to enter into the contract. Conventionally, the delivery of blurred images to uncontracted viewers has been made using a system as shown in known documents, for example, Japanese Patent Kokai No. 2001-258004 (Patent Document 1). The system disclosed in Patent Document 1 utilizes spatial salability to generate blurred images for contents of pay broadcasting programs among three layer structures (space, SNR, time) defined by MPEG-2 (ISO/IEC1381802) which specifies an image signal decoding standard and the like. This system scrambles part of bit streams, for which the copy right should be protected, when images are encoded on the transmission side of the broadcasting programs. An image decoding apparatus of a viewer who has a viewing right reproduces normal images through predetermined descrambling, whereas the scrambled images cannot be descrambled by an image decoding apparatus of a viewer who does not have the viewing right, so that the outline of the images can only be recognized.

Specifically, in the foregoing system, data strings of so-called free streams are generated on a basic layer of the spatial salability, and scrambled data strings of pay stream are generated on an extension layer of the same. Then, the free streams and pay streams are multiplexed on transmission media such as terrestrial, satellite waves, cables and the like for delivery from the broadcasting program provider to respective viewers, such that viewers having the viewing right alone can decode encoded parts of pay streams with a predetermined decoding key.

However, since the conventional system needs to transmit free streams and pay streams, both of which have a large amount of data, in combination, there is a disadvantage that an increased amount of data must be multiplexed on the transmission media. Also, since the processing is performed by the spatial salability, the scrambling and descrambling require circuits, for example, an up sampler, a down sampler and the like, leading to another disadvantage that an image encoding/decoding apparatus is complicated in configuration.

Further, when a screen is partially concealed in the conventional system by concealing only part of the screen through masking, such that important images are not shown to viewers who do not have the viewing right, while the entire screen is shown to viewers who have the viewing right, for example, part of the screen which should not be shown is concealed by OSD (On Screen Display) or the like after decoding, or part of the screen which is shown and part of the screen which should not be shown are encoded separated, and they are combined after decoding. However, the former method is insufficient in concealing to cause a problem from a viewpoint of the protection for contents, while the latter method has the disadvantage that the boundary is conspicuous between a concealed part and a non-concealed part after the combination to damage the reproduced image.

### SUMMARY OF THE INVENTION

It is an object of the present invention to provide, by way of example, a video delivery system and a video delivery method which are capable of reducing the amount of data streams to be transmitted without damaging reproduced images when a screen is partially concealed in pay digital broadcasting.

According to a first feature of the present invention, a video signal transmitter includes a shield processing means for concealing an input video signal such that a part of each frame screen included in the input video signal presents a predetermined pattern, a first compression encoding means for applying compression encoding to the concealed video signal at a high compression ratio, a subtracting means for extracting a differential signal between the compression encoded vide signal and the input video signal, a second compression encoding means for applying compression encoding to the differential signal at a low compression ratio, and an encrypting means for applying predetermined encryption to an output signal from the second compression encoding means, wherein the encrypted signal is multiplexed on an output signal from the first compression encoding means, and the multiplexed signal is transmitted.

According to a second feature of the present invention, a video signal receiver includes a first decoding means for receiving a signal transmitted from the video signal transmitter according to the first feature of the present invention, and applying decompression decoding to a high compression encoded video signal included in the received signal, a second decoding means for applying decryption and decompression decoding to an encrypted and low compression encoded video signal included in the received signal, and an adding means for adding respective output signals of the first and second decoding means.

According to a third feature of the present invention, a video signal transmission method comprising the steps of concealing an input video signal such that a part of each frame screen included in the input video signal presents a predetermined pattern, applying compression encoding to the concealed video signal at a high compression ratio, extracting a differential signal between the compression encoded vide signal and the input video signal, applying compression encoding to the differential signal at a low compression ratio, applying predetermined encryption to the compression encoded signal at the low compression ratio, and multiplexing the encrypted signal on the high compression encoded signal, and transmitting the multiplexed signal.

According to a fourth feature of the present invention, a video signal reception method includes a first decoding step of receiving a signal transmitted by the video signal transmission method according to the third feature of the present invention, and applying decompression decoding to a high compression encoded video signal included in the received signal, a second decoding step of applying decryption and decompression decoding to an encrypted and low compression encoded video signal included in the received signal, and a step of adding the respective signals which have undergone the processing of the first and second decoding steps.

According to a fifth feature of the present invention, a computer program causes a computer to implement a function of shielding an input video signal such that a part of each frame screen included in the input video signal presents a predetermined pattern, a function of applying compression encoding to the concealed video signal at a high compression ratio, a function of extracting a differential signal between the compression encoded vide signal and the input video signal, a function of applying compression encoding to the differential signal at a low compression ratio, a function of applying predetermined encryption to the compression encoded signal at the low compression ratio, and a function of multiplexing the encrypted signal on the high compression encoded signal, and transmitting the multiplexed signal.

According to a sixth feature of the present invention, a computer program causes a computer to implement a first decoding function of receiving a transmission signal generated by the program according to the fifth feature of the present invention, and applying decompression decoding to a high compression encoded video signal included in the received signal, a second decoding function of applying decryption and decompression decoding to an encrypted and low compression encoded video signal included in the received signal, and a function of adding the respective signals which have undergone the processing of the first and second decoding functions.

### BRIEF DESCRIPTION OF THE DRAWINGS

Fig. 1 is a block diagram showing the configuration of a video signal delivery system according to a first embodiment of the present invention; and
Fig. 2 is a block diagram showing the configuration of a video signal delivery system according to a second embodiment of the present invention.

### DETAILED DESCRIPTION OF THE INVENTION

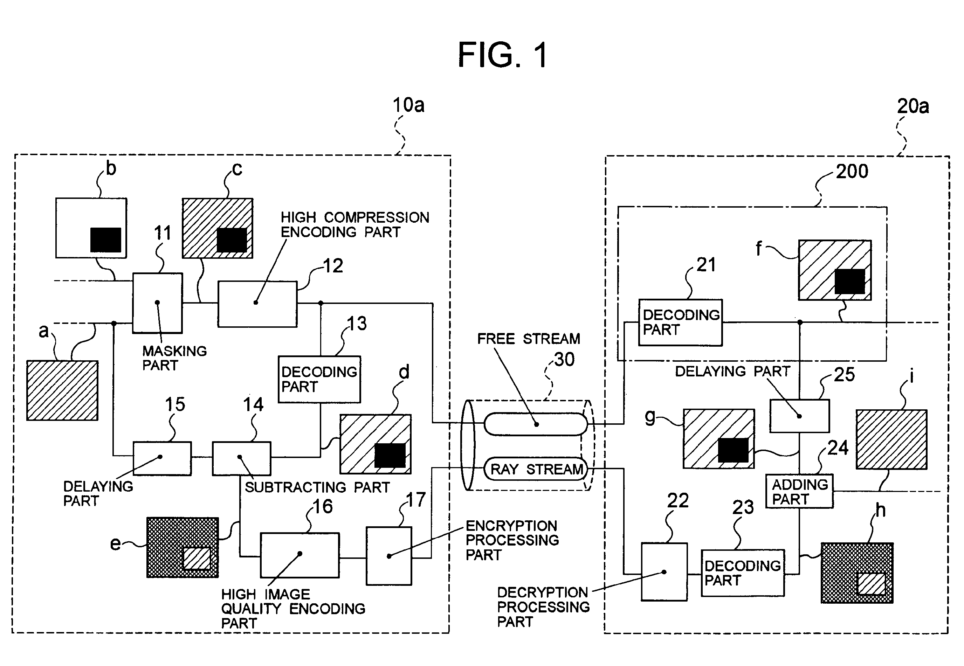

Fig. 1 shows a first embodiment of a video signal delivery system according to the present invention. In Fig. 1, a video signal transmitter 10a is installed in a station of an operator who runs digital broadcasting businesses such as terrestrial or satellite broadcasting, CATV, or the like. A signal transmitted from the video signal transmitter 10a is transmitted to a video signal receiver 20a installed in the premise of each viewer who receives the delivery of digital broadcasting programs through a signal transmission path 30, for example, a spatial wave propagation path, a coaxial cable or the like.

The video signal transmitter 10a comprises a masking part 11 for applying predetermined masking to an input video signal; a high compression encoding part 12 for applying a high image signal compression to an output signal from the masking part 11; and a decoding part 13 for again decoding a signal encoded in the high compression encoding part 12. The video signal transmitter 10a also comprises a delaying part 15 for delaying the input video signal by a predetermined time; a subtracting part 14 for extracting a differential signal between an output signal from the delaying part 15 and an output signal from the decoding part 13; a high image quality encoding part 16 for applying a low image signal compression to the differential signal in order to maintain the image quality; and an encryption processing part 17 for applying predetermined encryption to an output signal from the high quality encoding part 16.

Respective output signals from the high compression encoding part 12 and encryption processing part 17 are multiplexed in the same transmission channel by a multiplexing method, for example, time-division multiplexing, and are sent out to a predetermined signal transmission path 30 from the video signal transmitter 10a. Assume in the following description that a data string, which is the output signal from the high compression encoding part 12, is called the "free stream," while a data string, which is the output signal from the encryption processing part 17, is called the "pay stream."

The video signal receiver 20a in turn comprises a decoding part 21 for decoding a free stream included in a received signal; and a delaying part 25 for delaying an output signal of the decoding part 21 by a predetermined time. The video signal receiver 20a further comprises a decryption processing part 22 for decrypting an encrypted pay stream included in the received signal; a decoding part 23 for decoding a compressed output signal from the decryption processing part 22; and an adder 24 for adding an output signal from the decoding part 21 and an output signal from the decoding part 23.

Next, the operation in the video signal delivery system in Fig. 1 will be described. Schematic diagrams of images a - h shown in Fig. 1 conceptually represent displayed images of video signals at respective locations in the video signal transmitter 10a and video signal receiver 20a. The density of hatching filled in each image indicates the resolution of each image, where a higher density of hatching means a higher image quality.

First, an image a (hereinafter called the "original image a") delivered to viewers is supplied to the masking part 11 from a delivered image generator (not shown) disposed in front of the video signal transmitter 10a. Simultaneously with this, the masking part 11 is supplied with a predetermined masking image b from a masking view control circuit (not shown) disposed likewise in front of the video signal transmitter 10a.

The masking image b means a frame image for concealing (masking) part of the original image a which is desirably not shown to viewers who do not have a viewing right. For example, when each of pixels making up a displayed image has an 8-bit luminance value, i.e., 0th to 255th levels of gradation, the masking image b has the luminance value of zero for part of the image which should not be shown to viewers who do not have the viewing right, i.e., a concealed area (solid black area in the image b), and the luminance value of 255 for part of the image which may be shown to these viewers, i.e., a non-concealed area (around the solid black area in the image b).

The masking part 11 takes a logical AND of the luminance values of a pixel in the original image a and a corresponding pixel in the masking image b on a pixel-by-pixel basis to generate a free stream original image c which is then supplied to the high compression encoding part 12. The high compression encoding part 12 applies a signal compression to the free stream original image c at a high code compression ratio to generate a data string of a free stream.

The data string of the free stream is multiplexed on a data string of a pay stream, later described, and the resulting data string is transmitted from the video signal transmitter 10a to the transmission path 30 and simultaneously to the decoding part 13 as well.

The decoding part 13 decodes the free stream to generate a decoded free stream image d. Since the free stream has undergone the high compression encoding in the high compression encoding part 12, the decoded image d decoded by the decoding part 13 has a lower image quality, as compared with the aforementioned free stream original image c. For reference, since the decoding in the decoding part 13 is the same as that in the decoding part 21 in the video signal receiver 20a, later described, the decoded image d corresponds to a reproduced free stream image f which can be viewed on the video signal receiver 20a by a viewer who does not have the viewing right.

Generally, an encoding part of a video signal transmitter contains a local decoder for again decoding an encoded signal because of requirements for processing operations therein. Therefore, an output signal of the built-in local decoder may be utilized to generate the decoded image d without separately disposing the decoding part 13 within the video signal transmitter 10a.

The original image a of the input video signal is also supplied to the delaying part 15 which adds a predetermined delay time to the original image a, and then, the resulting original image a is output to the subtracting part 14. Next, the subtracting part 14 calculates a differential signal between the signal supplied from the delaying part 15 and the decoded image d supplied from the decoding part 13.

Since an image represented by the differential signal is a difference between corresponding pixel components in the original image a and decoded image d, the differential signal presents a pattern as an image e shown in Fig. 1.

Specifically, in its concealed area, the luminance value "0" of the concealed area (filled with solid black in the image d) in the decoded image d is simply subtracted from the luminance value of the original image a, so that the luminance value in this area of the original image remains as it is (hatched area in the image e). Likewise, with regard to its non-concealed area, the luminance values of corresponding pixel components are subtracted one from the other at each of pixels in the original image a and decoded image d. The decoded image d is generated by applying the high compression to the free stream original image c, and again decoding the resulting compressed image. Therefore, the decoded image d corresponds to a low quality version of the original image a, and therefore in the non-concealed area, the corresponding pixel components of the decoded image d and original image a have approximate luminance values, so that a subtraction of one from the other results in substantially zero (a checkers area in the image e). Specifically, the checkers area in the image e only includes an error component of the luminance value between the original image a and decoded image d in the non-concealed area, and the error component has a value extremely close to zero.

The differential signal (image e), which is the output of the subtractor 14, is supplied to the high image quality encoding part 16 which compresses the differential signal. The high image quality encoding part 16 applies a low image signal compression to the differential signal (image e) as compared with the high compression encoding part 12 in order to maintain the image quality. As described above, the non-concealed area, which occupies a majority of the image e, comprises only error components between the original image a and decoded image d, so that the amount of information itself is extremely small. For this reason, even if a low signal compression is applied to an image, a data string encoded by the high image encoding part 16 has an extremely small amount of data.

The data string output from the high image encoding part 16 is encrypted in the encryption processing part 17 to generate a data string of a pay stream.

The video signal transmitter 10a multiplexes the data string of the pay stream, and the data string of the free stream, which is the output signal from the high compression encoding part 12, in a single transmission channel by a multiplexing method, for example, time-division multiplexing or the like, and sends out the multiplexed data strings onto the transmission path 30.

Next, the operation of the video signal receiver 20a will be described.

The video signal receiver 20a differs in its operation range depending on whether or not a viewer who owns the receiver 20a has the viewing right. Specifically, in the receiver 20a which is installed in the premise of a viewer who does not have the viewing right, only a portion (200) surrounded by a one-dot chain line in Fig. 1 operates, whereas in the receiver 20a which is installed in the premise of a viewer who has the viewing right, all functions of the video signal receiver 20a operate.

First, when the receive 20a is installed in the premise of a viewer who does not have the viewing right, a free stream included in a received signal is decoded by the decoding part 21 to reconstruct the reproduced free stream image f. Since this decoding is similar to the decoding in the decoding part 13 of the video signal transmitter 10a, the reproduced free stream image f from the decoding part 21 is the same as the decoded image d of the video signal transmitter 10a. In other words, the reproduced free stream image f is an image which is degraded in image quality, as compared with the original image a, through the high compression encoding, with the concealed area being masked in the image. Then, a viewer who does not have the viewing right views only this reproduced free stream image f.

On the other hand, in the receiver installed in the premise of a viewer who has the viewing right, in addition to the decoding of the reproduced free stream image f, the pay stream included in the received signal is processed. Specifically, the data string of the pay stream is released from the predetermined encryption applied thereto in the video signal transmitter 10a in the decryption processing part 22. Then, the decrypted free stream undergoes predetermined decoding in the next decoding part 23 to reproduce a decoded image h. Since the decoding in the decoding part 23 corresponds to the encoding in the high image quality encoding part 16 in the video signal transmitter 10a, the decoded image h, which is the output from the decoding part 23, is an image similar to the input image e of the high image quality encoding part 16.

With the receiver installed in the premise of a viewer who has the viewing right, the reproduced free stream image f from the decoding part 21 is further added a predetermined delay time through the delaying part 25, and then supplied to the adding part 24. On the other hand, the adding part 24 is also applied with the decoded image h from the decoding part 23, so that the adding part 24 adds both the image signals. An image g, which is the output of the delaying part 25, is similar to the image f, because it is generated simply by delaying the reproduced free stream image f from the decoding part 21 by a predetermined time, and therefore is similar to the decoded image d in the video signal transmitter 10a, as described above.

Stated another way, the addition of the image h and image g, performed in the adding part 24, is equal to the addition of the image e and image d in the video signal transmitter 10a, and the image resulting from this addition is equal to the original image a. Then, the viewer who has the viewing right can view an image i in high image quality equal to the original image a.

Specifically, in this embodiment, since the high compression encoding is applied to the free stream original image c, it is possible to reduce the data amount of the resulting free stream. On the other hand, the low compression encoding is applied to the image e in order to maintain the high image quality, but since a majority of the image e includes only error components of the non-concealed area, the amount of its information is extremely small. For this reason, the pay stream generated even by applying the low compression encoding has an extremely small amount of data. Consequently, according to this embodiment, it is possible to reduce the amount of data to be transmitted, as compared with the transmission of a free stream in low image quality simply multiplexed on a pay stream in high image quality.

As described above, the video signal delivery system of this embodiment comprises the video signal transmitter 10a and video signal receiver 20a.

In summary, the video signal transmitter 10a comprises the masking part 11 which corresponds to a shield processing means for concealing an input video signal such that a part of each frame scream included in the input video signal presents a predetermined pattern image; the high compression encoding part 12 which corresponds to a first compression encoding means for applying compression encoding to the concealed video signal at a high compression ratio; the subtracting part 14 which corresponds to subtracting means for extracting a differential signal of the compression encoded video signal from the input video signal; the high image quality encoding part 16 which corresponds to second compression encoding means for applying compression encoding to the differential signal at a low compression rate; and the encryption processing part 17 which corresponds to an encrypting means for applying predetermined encryption to an output signal from the second compression encoding means, wherein the encrypted signal is multiplexed on the output signal from the high compression encoding part 12, and resulting multiplexed signal is transmitted.

The video signal receiver 20a in turn comprises the decoding part 21 which corresponds to a first decoding means for receiving a signal transmitted from the video signal transmitter 10a, and applying decompression decoding to a video signal, which has undergone the high compression encoding, included in the received signal; the decryption processing part 22 and decoding part 23 which correspond to a second decoding means for applying decryption and decompression decoding to the encrypted and low compression encoded video signal included in the received signal; and the adding part 24 which corresponds to an adding means for adding output signals of the respective first and second decoding means.

The video signal delivery system of this embodiment, which employs the configuration described above, can reduce the amount of data which should be transmitted from the video signal transmitter to the video signal receiver when a free image partially having a concealed area on a displayed screen and a high-quality pay image without concealed area are delivered at the same time.

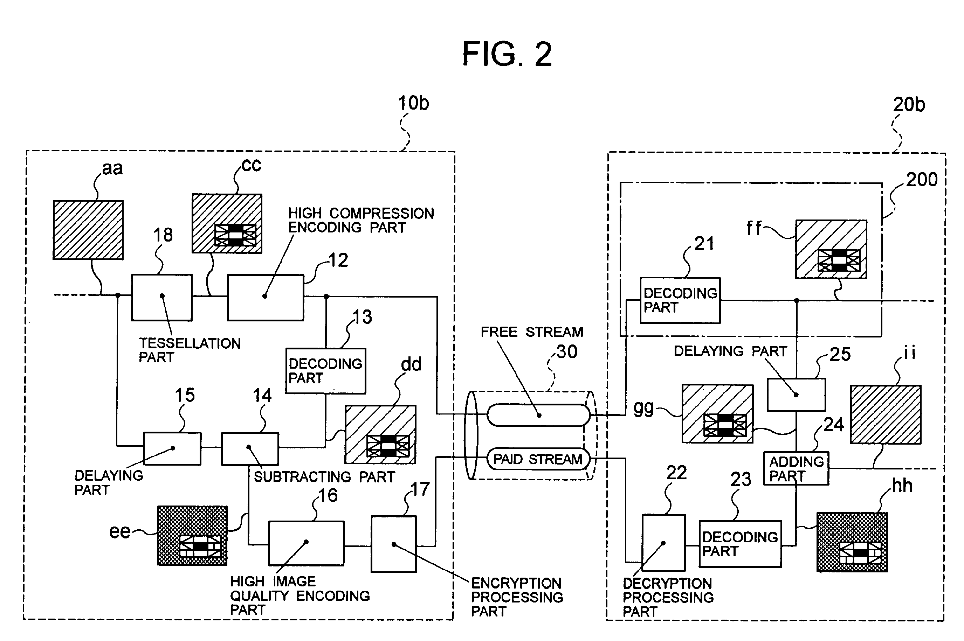

Next, a second embodiment of the video signal delivery system according to the present invention will be described with reference to Fig. 2.

In Fig. 2, a video signal transmitter 10b is installed in a station of an operator who runs digital broadcasting businesses such as terrestrial or satellite broadcasting, CATV, or the like. A signal transmitted from the video signal transmitter 10b is delivered to a video signal receiver 20b installed in the premise of each viewer who receives the delivery of digital broadcasting programs through a signal transmission path 30, for example, a spatial wave propagation path, a coaxial cable or the like.

The first embodiment described above differs from the second embodiment described below only in that an image is partially concealed through masking or tessellation by the video signal transmitter 10a or 10b. Therefore, the following description will omit those components which have already been described in the first embodiment.

In the second embodiment, the video signal transmitter 10b comprises a tessellation part 18 for applying predetermined tessellation to a displayed screen represented by an input video signal; a high compression encoding part 12, a decoding part 13; a delaying part 15; a subtracting part 14; a high image quality encoding part 16; and an encryption processing part 17. The video signal receiver 20b in turn comprises a decoding part 21; a delaying part 25; a decryption processing part 22; a decoding part 23; and an adding part 24.

Next, the operation in the video signal delivery system of Fig. 2 will be described, centered on the tessellation which is applied to an input video signal supplied to the video signal transmitter 10b. Schematic diagrams of images aa - hh shown in Fig. 2 correspond to the images a - h, respectively, in the first embodiment.

First, as the image aa (hereinafter called the "original image aa") delivered to viewers is supplied to the tessellation part 18 from a delivered image generator (not shown) disposed in front of the video signal transmitter 10b, the tessellation part 18 applies predetermined tessellation to the image. Specifically, the tessellation part 18 covers part of the screen represented by the original image aa, which is not desirably shown to viewers who do not have the viewing right, i.e., a concealed area (a mosaic pattern area in the image cc) with a mosaic pattern, and maintains the luminance value of the surrounding area which may be shown, i.e., a non-concealed area (around the mosaic pattern area in the image cc) to be the same as that of the original image aa, to generate a free stream original image cc.

The free stream original image cc is supplied to the high compression encoding part 12 which applies high compression to the free stream original image cc to generate a data string of highly compressed free stream. The data string of the free stream is multiplexed on a data string of a pay stream, later described, and resulting multiplexed streams are transmitted from the video signal transmitter 10b to the signal transmission path 30, and are also supplied to the decoding part 13 at the same time.

The decoding part 13 decodes the free stream to generate a decoded free stream image dd. Since the free stream has undergone the high compression encoding in the high compression encoding part 12, the decoded image dd decoded by the decoding part 13 is degraded in image quality as compared with the aforementioned free stream original image cc. For reference, since the decoding in the decoding part 13 is similar to decoding in the decoding part 21 of the video signal receiver 20b, later described, the decoded image dd corresponds to the reproduced free stream image ff which can be viewed by a viewer who does not have the viewing right on the video signal receiver 20b. The decoding part 13 may utilize a local decoder built in the high compression encoding part 12.

On the other hand, the original image aa is also supplied to the delaying part 15 which adds a predetermined delay time to the original image aa, and the delayed original image is output to the subtracting part 14. The subtracting part 14 calculates a differential signal between the signal supplied from the delaying part 15 and the decoded image dd supplied from the decoding part 13.

Since the image represented by the differential signal is a difference between corresponding pixel components in the original image aa and decoded image dd, the differential signal presents a pattern as an image ee shown in Fig. 2. Specifically, its concealed area has the luminance value of the original image aa from which the luminance value of the mosaic pattern in the decoded image dd is subtracted (the mosaic pattern area of the image ee). Likewise, with regard to the non-concealed area, one of the luminance values of corresponding pixel components is subtracted from the other in each of the original image aa and decoded image dd.

The decoded image dd is generated by applying the high compression to the free stream original image cc, and again decoding the resulting compressed image. Therefore, the decoded image dd corresponds to a low quality version of the original image aa, and hence in the non-concealed area, the corresponding pixel components of the decoded image dd and original image aa have approximate luminance values, so that a subtraction of one from the other results in substantially zero (a checkers area in the image ee). Specifically, the checkers area in the image ee only includes an error component of the luminance value between the original image aa and decoded image dd in the non-concealed area, and the error component has a value extremely close to zero.

The differential signal (image ee), which is the output of the subtractor 14, is supplied to the high image quality encoding part 16 which compresses the differential signal. The high image quality encoding part 16 applies a low image signal compression to the differential signal (image ee), as compared with the high compression encoding part 12, in order to maintain the image quality. As described above, the non-concealed area, which occupies a majority of the image ee, comprises only error components between the original image aa and decoded image dd, so that the amount of information itself is extremely small. Therefore, even if a low image signal compression is applied, a data string encoded by the high image encoding part 16 has an extremely small amount of data.

The data string output from the high image encoding part 16 is applied to the encryption processing part 17 which applies predetermined encryption to the data string to generate a data string of a pay stream.

The video signal transmitter 10b multiplexes the data string of the pay stream, and the data string of the free stream, which is the output signal from the high compression encoding part 12, in a single transmission channel by a multiplexing method, for example, time-division multiplexing or the like, and sends out the multiplexed data strings onto the transmission path 30.

Next, the operation of the video signal receiver 20b will be described.

The video signal receiver 20b differs in its operation range depending on whether or not a viewer who owns the receiver 20a has the viewing right. Specifically, in the receiver 20a which is installed in the premise of a viewer who does not have the viewing right, only a portion 200 surrounded by a one-dot chain line in Fig. 2 operates, whereas in the receiver 20a which is installed in the premise of a viewer who has the viewing right, all functions of the video signal receiver 20b operate.

First, when the receive 20b is installed in the premise of a viewer who does not have the viewing right, a free stream included in a received signal is decoded by the decoding part 21 to reconstruct the reproduced free stream image ff. Since this decoding is similar to the decoding in the decoding part 13 of the video signal transmitter 10a, the reproduced free stream image ff from the decoding part 21 is the same as the decoded image dd of the video signal transmitter 10b. In other words, the reproduced free stream image ff is an image which is degraded in image quality, as compared with the original image aa, through the high compression encoding, with the concealed area which is tessellated in the image. Then, a viewer who does not have the viewing right views only this reproduced free stream image ff.

On the other hand, in the receiver installed in the premise of a viewer who has the viewing right, in addition to the decoding of the reproduced free stream image ff, the pay stream included in the received signal is processed. Specifically, the data string of the pay stream included in the received signal is released from the predetermined encryption applied thereto in the video signal transmitter 10b in the decryption processing part 22. Then, the decrypted free stream undergoes predetermined decoding in the next decoding part 23 to reproduce a decoded image hh. Since the decoding in the decoding part 23 corresponds to the encoding in the high image quality encoding part 16 in the video signal transmitter 10b, the decoded image hh, which is the output from the decoding part 23, is an image similar to the input image ee of the high image quality encoding part 16.

With the receiver installed in the premise of a viewer who has the viewing right, the reproduced free stream image ff from the decoding part 21 is further added a predetermined delay time through the delaying part 25, and then supplied to the adding part 24. On the other hand, the adding part 24 is also applied with the decoded image hh from the decoding part 23, so that the adding part 24 adds both the image signals. An image gg, which is the output of the delaying part 25, is similar to the image ff, because it is generated simply by delaying the reproduced free stream image ff from the decoding part 21 by a predetermined time, and therefore is similar to the decoded image dd in the video signal transmitter 10b, as described above.

Stated another way, the addition of the image hh and image gg performed in the adding part 24, is equal to the addition of the image ee and image dd in the video signal transmitter 10a, and the image resulting from this addition is equal to the original image aa. Then, the viewer who has the viewing right can view an image ii in high image quality equal to the original image aa.

Specifically, in this embodiment, since the high compression encoding is applied to the free stream original image cc, it is possible to reduce the data amount of the resulting free stream. On the other hand, the low compression encoding is applied to the image ee in order to maintain the high image quality, but since a majority of the image ee includes only error components of the non-concealed area, the amount of its information is extremely small. For this reason, the pay stream generated even by applying the low compression encoding also has a small amount of data. Consequently, according to this embodiment, it is possible to reduce the amount of data to be transmitted, as compared with the transmission of a free stream in low image quality simply multiplexed on a pay stream in high image quality.

Also, in the second embodiment, since part of a screen which is not desirably shown is concealed by masking but by tessellation, the concealment can be made at an arbitrary position in an arbitrary size on a screen-by-screen basis, as compared with the first embodiment. This can further draw the interest of uncontracted viewers, thus increasing the value of utilizing a service for promoting viewers to enter into the viewing contract for pay digital broadcasting.

As described above, the video signal delivery system of this embodiment comprises the video signal transmitter 10b and video signal receiver 20b.

The video signal transmitter 10b comprises the tessellation part 18 which corresponds to a shield processing means for concealing an input video signal such that a part of each frame scream contained in the input video signal is formed into a mosaic pattern; the high compression encoding part 12 which corresponds to a first compression encoding part for applying compression encoding to the concealed video signal at a high compression ratio; the subtracting part 14 which corresponds to a subtracting part for extracting a differential signal between the compress encoded video signal and the input video signal; the high image quality encoding part 16 which corresponds to a second compression encoding part for applying compression encoding to the differential signal at a low compression ratio; and the encryption processing part 17 which corresponds to an encrypting means for applying a predetermined encryption to an output signal from the second compression encoding means, where the encrypted signal is multiplexed on an output signal from the high compression encoding part 12, and the resulting multiplexed signal is transmitted.

The video signal receiver 20b in turn comprises the decoding part 21 which corresponds to a first decoding means for receiving a signal transmitted from the video signal transmitter 10a, and applying decompression decoding to a video signal, which has undergone high compression encoding, included in the received signal; the decryption processing part 22 and decoding part 23 which corresponds to a second decoding means for applying decryption and decompression decoding to the video signal, which has undergone encryption and low compression encoding, included in the received signal; and the adding part 24 which corresponds to an adding means for adding respective output signals of the first and second decoding means.

The video signal delivery system of the second embodiment, which takes the configuration described above, can reduce the amount of data which should be transmitted from the video signal transmitter to the video signal receiver, and can simultaneously deliver a free image which partially has a concealed area on a displayed screen, and a high-quality pay image without concealed area.

While the foregoing first and second embodiments have applied the masking or tessellation to a limited area of an original image, the present invention is not limited to such exemplary implementations. For example, the present invention also includes an implementation in which a masked area or tessellated area is limited to a minimum or is eliminated. In this event, a free stream will be a data string of a low image quality screen which has undergone high compression encoding, while a pay stream will be a data stream which has undergone low compression encoding for error components between the low image quality screen and an original image. Then, a viewer who does not have the viewing right can reproduce only the low image quality screen of the free stream, while a viewer who has the viewing right can reproduce a high image quality screen in combination of the free stream data with pay stream data. Even in this configuration, the amount of data sent from the transmitter to the receiver can be reduced as compared with that required for simply decoding and transmitting a low-quality image and a high quality image.

Further, the present invention is not limited in implementation to the respective embodiments described above, but a video signal delivery system based on the present invention may be implemented in a net-based program contents delivery service which utilizes a network, for example, the Internet or the like. Also, when the video signal receiver installed in the premise of a viewer comprises a storage medium, for example, a hard disk drive or the like, each of a separately delivered pay stream and free stream may be once stored in the storage medium, such that they are combined when they are viewed.

Also, while the embodiments described above have shown examples in which each of a pay stream and a free stream is multiplexed on and transmitted through the same transmission medium, the present invention is not limited in implementation to such an example. For example, a free stream may be transmitted through a broadcasting type delivery transmission medium, while a pay stream may be transmitted through a communication type transmission medium such as the Internet. Generally, since the pay stream is only required to be transmitted to particular viewers who have concluded a viewing contract, the use of this transmission method can reduce the amount of data transmitted through a communication type transmission medium which entails a relatively high cost.

## Claims

1. A video signal transmitter comprising:
a shield processing means for concealing an input video signal such that a part of each frame screen included in the input video signal presents a predetermined pattern;
a first compression encoding means for applying compression encoding to the concealed video signal at a high compression ratio;
a subtracting means for extracting a differential signal between the compression encoded video signal and the input video signal;
a second compression encoding means for applying compression encoding to the differential signal at a low compression ratio; and
an encrypting means for applying predetermined encryption to an output signal from said second compression encoding means,
wherein the encrypted signal is multiplexed on an output signal from said first compression encoding means, and the multiplexed signal is transmitted.

2. A video signal transmitter according to claim 1, wherein said predetermined pattern comprises a uniform color screen.

3. A video signal transmitter according to claim 1, wherein said predetermined pattern comprises a mosaic screen made up of adjacent sub-screens which differ in color.

4. A video signal receiver comprising:
a first decoding means for receiving a signal transmitted from the video signal transmitter according to claim 1, and applying decompression decoding to a high compression encoded video signal included in the received signal;
a second decoding means for applying decryption and decompression decoding to an encrypted and low compression encoded video signal included in the received signal; and
an adding means for adding respective output signals of said first and second decoding means.

5. A video signal delivery system comprising:
a video signal transmitter including a shield processing means for concealing an input video signal such that a part of each frame screen included in the input video signal presents a predetermined pattern, a first compression encoding means for applying compression encoding to the concealed video signal at a high compression ratio, a subtracting means for extracting a differential signal between the compression encoded video signal and the input video signal, a second compression encoding means for applying compression encoding to the differential signal at a low compression ratio, and an encrypting means for applying predetermined encryption to an output signal from said second compression encoding means, wherein the encrypted signal is multiplexed on an output signal from said first compression encoding means, and the multiplexed signal is transmitted; and
a video signal receiver including a first decoding means for receiving a signal transmitted from said video signal transmitter, and applying decompression decoding to a high compression encoded video signal included in the received signal, a second decoding means for applying decryption and decompression decoding to an encrypted and low compression encoded video signal included in the received signal, and an adding means for adding respective output signals of said first and second decoding means.

6. A video signal transmission method comprising the steps of:
concealing an input video signal such that a part of each frame screen included in the input video signal presents a predetermined pattern;
applying compression encoding to the concealed video signal at a high compression ratio;
extracting a differential signal between the compression encoded video signal and the input video signal;
applying compression encoding to the differential signal at a low compression ratio;
applying predetermined encryption to the compression encoded signal at the low compression ratio; and
multiplexing the encrypted signal on the high compression encoded signal, and transmitting the multiplexed signal.

7. A video signal reception method comprising:
a first decoding step of receiving a signal transmitted by the video signal transmission method according to claim 6, and applying decompression decoding to a high compression encoded video signal included in the received signal;
a second decoding step of applying decryption and decompression decoding to an encrypted and low compression encoded video signal included in the received signal; and
a step of adding the respective signals which have undergone the processing of said first and second decoding steps.

8. A video signal delivery method comprising:
a video signal transmission method including the steps of concealing an input video signal such that a part of each frame screen included in the input video signal presents a predetermined pattern, applying compression encoding to the concealed video signal at a high compression ratio, extracting a differential signal between the compression encoded video signal and the input video signal, applying compression encoding to the differential signal at a low compression ratio, applying predetermined encryption to the compression encoded signal at the low compression ratio, and multiplexing the encrypted signal on the high compression encoded signal, and transmitting the multiplexed signal; and
a video signal reception method including a first decoding step of receiving a signal transmitted by said video signal transmission method, and applying decompression decoding to a high compression encoded video signal included in the received signal, a second decoding step of applying decryption and decompression decoding to an encrypted and low compression encoded video signal included in the received signal, and a step of adding the respective signals which have undergone the processing of said first and second decoding steps.

9. A program for causing a computer to implement:
a function of shielding an input video signal such that a part of each frame screen included in the input video signal presents a predetermined pattern;
a function of applying compression encoding to the concealed video signal at a high compression ratio;
a function of extracting a differential signal between the compression encoded video signal and the input video signal;
a function of applying compression encoding to the differential signal at a low compression ratio;
a function of applying predetermined encryption to the compression encoded signal at the low compression ratio; and
a function of multiplexing the encrypted signal on the high compression encoded signal, and transmitting the multiplexed signal.

10. A program for causing a computer to implement:
a first decoding function of receiving a transmission signal generated by the program according to claim 9, and applying decompression decoding to a high compression encoded video signal included in the received signal;
a second decoding function of applying decryption and decompression decoding to an encrypted and low compression encoded video signal included in the received signal; and
a function of adding the respective signals which have undergone the processing of said first and second decoding functions.
